# EUROPÄISCHE PATENTSCHRIFT

(11) **EP 3 891 642 B1**
(45) Veröffentlichungstag und Bekanntmachung des Hinweises auf die Patenterteilung: **06.03.2024**
(21) Anmeldenummer: 19813311.8
(22) Anmeldetag: 29.11.2019
(51) Int. Cl.: G06F 21/64, H04L 9/32

(54) **VERFAHREN ZUR SICHERUNG DER VERTRAUENSWÜRDIGKEIT VON QUELLCODES**
METHOD FOR ENSURING THE TRUSTWORTHINESS OF SOURCE CODES
MÉTHODE POUR ASSURER LA FIABILITÉ DES CODES SOURCES

(30) Priorität: 05.12.2018 DE 102018131084
(43) Veröffentlichungstag der Anmeldung: 13.10.2021
(73) Patentinhaber: Uniscon universal identity control GmbH, 80339 München (DE)
(72) Erfinder: JÄGER, Hubert, 82049 Pullach (DE); FIETZ, Jaro, 19067 Rampe (DE)
(74) Vertreter: 2s-ip Schramm Schneider Bertagnoll Patent- und Rechtsanwälte Part mbB
(86) Internationale Anmeldenummer: PCT/EP2019/083134
(87) Internationale Veröffentlichungsnummer: WO 2020/114915

(56) Entgegenhaltungen:
- DE-A1- 10 336 148
- SG-A1- 186 515
- US-A1- 2016 365 981

## Beschreibung

### Gebiet der Erfindung

Die Erfindung betrifft ein Verfahren zur Sicherung der Vertrauenswürdigkeit von Software-Quellcode (nachfolgend vereinfacht Quellcode genannt), mit dem ein vertrauenswürdiger ausführbarer Code (Binärcode) bereitgestellt werden kann.

### Hintergrund der Erfindung

Mit vertrauenswürdigem Quellcode ist ein Code gemeint, in dem keine Komponenten- oder Code-Abschnitte enthalten sind, die nicht dem spezifizierten Zweck der zu erstellenden Software entsprechen und die Sicherheit der Daten dieser Software oder anderer auf derselben Rechnerinfrastruktur ausgeführten Software gefährden könnten. Nicht-vertrauenswürdige Teile des Codes (Quellcodes) können aus Versehen oder in absichtlicher Arglist entstehen oder eingeschleust werden. Wird aus dem Quellcode, der nicht-vertrauenswürdige Teile umfasst, ein ausführbares Programm erzeugt, ist auch das ausführbare Programm als nicht-vertrauenswürdig einzustufen.

Eine Methode, die Vertrauenswürdigkeit von Quellcodes zu sichern, ist die Sensibilisierung und Ausbildung der Software-Entwickler, bereits beim Schreiben des Quellcodes auf die Sicherheit zu achten. Damit kann allerdings nicht gewährleistet werden, dass nicht-vertrauenswürdige Quellcode-Abschnitte erzeugt werden.

Eine Methode, die Vertrauenswürdigkeit von Quellcodes weiter zu erhöhen, ist die sogenannte "Paarprogrammierung". Paarprogrammierung bedeutet, dass bei der Erstellung des Quellcodes jeweils zwei (oder auch mehrere) Programmierer gemeinsam an einem Computer arbeiten. Der erste Programmierer schreibt den Quellcode, während der zweite Programmierer den geschriebenen Quellcode kontrolliert, sowie Probleme, die ihm dabei auffallen, sofort anspricht. Diese Probleme können dann sofort im Gespräch der beiden Programmierer gelöst werden. Hierbei hat es sich als günstig herausgestellt, wenn sich die beiden Programmierer bezüglich ihrer Rollen häufig abwechseln. Auch die Zusammensetzung der Paare sollte häufig geändert werden, um die Vertrauenswürdigkeit des Quellcodes noch weiter zu erhöhen. Ein arglistiges Vorgehen des einen Programmierers wird durch die Kontrolle des anderen Programmierers weitestgehend verhindert.

Mit den genannten Maßnahmen kann allerdings nicht ausgeschlossen werden, dass aus einem an sich vertrauenswürdigen Quellcode ein nicht-vertrauenswürdiges ausführbares Programm erzeugt wird. Denn zwischen der Fertigstellung des Quellcodes bis zur Erzeugung des ausführbaren Programms kann der Quellcode beispielsweise durch nicht berechtigte Dritte verändert werden. Durch eine solche nachträgliche Veränderung des Quellcodes können nicht-vertrauenswürdige Quellcode-Abschnitte hinzugefügt oder ursprünglich vertrauenswürdige Quellcode-Abschnitte so geändert werden, dass sie anschließend nicht-vertrauenswürdig sind.

DE10336148A1 aus dem Stand der Technik lehrt ein Verfahren zum Signieren einer Datenmenge in einem Public-Key-System sowie ein Datenverarbeitungssystem zur Durchführung des Verfahrens. Die vorliegende Erfindung ist in den unabhängigen Ansprüchen dargelegt, wobei einige optionale Merkmale in den davon abhängigen Ansprüchen aufgeführt sind.

### Aufgabe der Erfindung

Aufgabe der vorliegenden Erfindung ist es daher, die Vertrauenswürdigkeit von Quellcodes so zu sichern, dass einerseits der Quellcode bis zur Erzeugung des ausführbaren Programms vertrauenswürdig bleibt und andererseits gewährleistet ist, dass die ausführbare Software aus einem vertrauenswürdigen Quellcode erzeugt wurde.

### Erfindungsgemäße Lösung

Diese Aufgabe wird erfindungsgemäß durch ein Verfahren zur Sicherung der Vertrauenswürdigkeit von Software-Quellcode (Quellcode) nach dem unabhängigen Patentanspruch gelöst. Vorteilhafte Ausgestaltungen und Weiterbildungen der Erfindung sind in den abhängigen Ansprüchen angegeben.

Bereitgestellt wird demnach ein Verfahren zur Sicherung der Vertrauenswürdigkeit von Software-Quellcode (Quellcode), wobei
- zumindest ein erster Softwareentwickler und ein zweiter Softwareentwickler für die Programmierung des Quellcodes registriert werden, wobei den jeweiligen Softwareentwicklern zugeordnete Daten zusammen mit einem dem jeweiligen Softwareentwickler gehörenden öffentlichen Signaturschlüssel in eine gesicherte Infrastruktur importiert werden,
- der erste Softwareentwickler den von ihm erstellten Quellcode mit seinem privaten Signaturschlüssel signiert und der zweite Softwareentwickler den vom ersten Softwareentwickler signierten Quellcode mit seinem privaten Signaturschlüssel signiert,
- der von beiden Softwareentwicklern signierte Quellcode in einem Quellcode-Server gespeichert wird,
- eine in der gesicherten Infrastruktur angeordnete Compilereinrichtung
   - den signierten Quellcode vom Quellcode-Server in die gesicherte Infrastruktur importiert,
   - überprüft, ob der importierte Quellcode mit privaten Signaturschlüsseln signiert wurde, die zu den importierten öffentlichen Signaturschlüsseln gehören, und
   - den importierten Quellcode in einen ausführbaren Binärcode übersetzt, und
- die Compilereinrichtung den Binärcode signiert und den signierten Binärcode auf einen Binärcode-Server außerhalb der gesicherten Infrastruktur exportiert und ihn dort zur weiteren Verwendung bereitstellt.

Dadurch ist die Vertrauenswürdigkeit von Quellcode von der Erstellung des Quellcodes bis zum Erzeugen des Binärcodes gewährleistet. Zudem ist gewährleistet, dass der Binärcode in vertrauenswürdige Weise erzeugt wird. Ferner ist damit auch die Vertrauenswürdigkeit des erzeugten Binärcodes gewährleistet.

Vorteilhaft ist es, wenn der zweite Softwareentwickler den vom ersten Softwareentwickler signierten Quellcode signiert nachdem er den Quellcode geprüft hat.

Vorteilhaft ist es weiter, wenn der erste Softwareentwickler den von ihm erstellten Quellcode signiert, nachdem der zweite Softwareentwickler den Quellcode geprüft hat.

Die Compilereinrichtung kann den Binärcode mit einem der Compilereinrichtung zugeordneten privaten Signaturschlüssel signieren und den signierten Binärcode zusammen mit dem zum privaten Signaturschlüssel gehörenden öffentlichen Schlüssel auf den Binärcode-Server exportieren.

Vorteilhaft ist es, wenn der der Compilereinrichtung zugeordnete private Signaturschlüssel ausschließlich in der gesicherten Infrastruktur gespeichert wird.

Besonders vorteilhaft ist es, wenn der der Compilereinrichtung zugeordnete private Signaturschlüssel ausschließlich in einer volatilen Speichereinrichtung der gesicherten Infrastruktur gespeichert wird.

Vorteilhaft ist es weiter, wenn der der Compilereinrichtung zugeordnete private Signaturschlüssel und der zu diesem privaten Signaturschlüssel gehörende öffentliche Schlüssel ausschließlich innerhalb der gesicherten Infrastruktur erzeugt werden.

Eine Sensoreinrichtung der gesicherten Infrastruktur kann laufend Zugriffe auf die gesicherte Infrastruktur überwachen und bei einer Detektion eines unberechtigten Zugriffes zumindest den der Compilereinrichtung zugeordneten privaten Signaturschlüssel löschen.

Nach dem Löschen des der Compilereinrichtung zugeordneten privaten Signaturschlüssels können ein neuer der Compilereinrichtung zugeordneter privater Signaturschlüssel und ein neuer zu dem neuen privaten Signaturschlüssel gehörender öffentlicher Schlüssel erzeugt werden.

### Kurzbeschreibung der Figuren

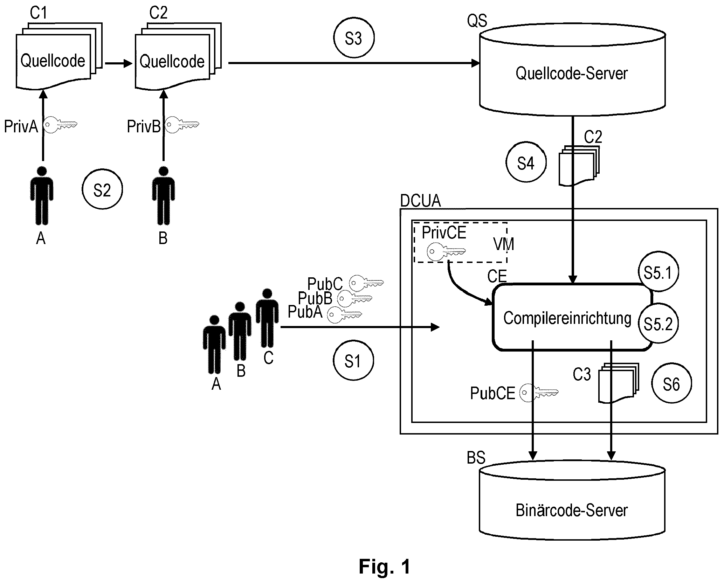

Einzelheiten und Merkmale der Erfindung sowie konkrete Ausgestaltungen der Erfindung ergeben sich aus der nachfolgenden Beschreibung in Verbindung mit der Zeichnung, wobei Fig. 1 ein Blockdiagramm einer Infrastruktur zur Sicherung der Vertrauenswürdigkeit von Quellcode zeigt, mit der gleichzeitig das erfindungsgemäße Verfahren zur Sicherung der Vertrauenswürdigkeit von Quellcode näher erläutert wird.

### Detaillierte Beschreibung der Erfindung

Mit Bezug auf Fig. 1 wird das erfindungsgemäße Verfahren zur Sicherung der Vertrauenswürdigkeit von Quellcode beschrieben, bei dem zwei Software-Entwickler A, B einen Quellcode erstellen, aus dem anschließend ein ausführbares Programm (nachfolgend auch Binärcode genannt) erzeugt wird. Das erfindungsgemäße Verfahren lässt sich allerdings nicht nur bei zwei Software-Entwicklern anwenden. In einer Ausgestaltung der Erfindung können auch mehrere Software-Entwicklerpaare unterschiedliche Quellcode-Abschnitte erstellen, wobei aus den mehreren unterschiedlichen Quellcode-Abschnitten ein vertrauenswürdiges ausführbares Programm (Binärcode) erzeugt wird.

Mit dem erfindungsgemäßen Verfahren kann automatisch und nicht abstreitbar dokumentiert werden, welche Software-Entwickler welchen Quellcode bzw. Quellcode-Abschnitte erzeugt haben und welche Software-Entwickler für welchen Quellcode bzw. für welche Quellcode-Abschnitte verantwortlich sind. Ein wesentlicher Vorteil des erfindungsgemäßen Verfahrens liegt darin, dass die Vertrauenswürdigkeit von Quellcode von der Erstellung des Quellcodes durch die Programmierer bis zur Erzeugung des ausführbaren Programms (Binärcode) durchgängig gesichert ist und auch durch Dritte nicht beeinträchtigt werden kann.

Gemäß dem erfindungsgemäßen Verfahren werden zunächst die Software-Entwickler A, B, C registriert und zur Entwicklung von Software akkreditiert (Schritt S1). Ferner werden in dem Schritt S1 Daten der jeweiligen Software-Entwickler A, B, C in eine gesicherte Infrastruktur DCUA importiert. Die Daten können beispielsweise den Namen der jeweiligen Software-Entwickler umfassen. Das Importieren der Daten ist allerdings keine notwendige Voraussetzung für das erfindungsgemäße Verfahren, sodass diese Daten der Software-Entwickler lediglich optional in die gesicherte Infrastruktur DCUA importiert werden können.

Jeder Software-Entwickler besitzt ein kryptographisches Schlüsselpaar, mit dem der jeweilige Software-Entwickler den von ihm erstellten Quellcode oder den von ihm überprüften Quellcode signieren kann. Das dem jeweiligen Software-Entwickler zugeordnete Schlüsselpaar umfasst einen öffentlichen kryptographischen Signaturschlüssel und einen privaten kryptographischen Signaturschlüssel. Bei dem in Fig. 1 gezeigten Beispiel ist das Schlüsselpaar, bestehend aus dem öffentlichen Signaturschlüssel PubA und dem privaten Signaturschlüssel PrivA, dem ersten Software-Entwickler A zugeordnet. Das Schlüsselpaar, bestehend aus dem öffentlichen Signaturschlüssel PubB und dem privaten Signaturschlüssel PrivB, ist dem zweiten Software-Entwickler B zugeordnet. Eine entsprechende Zuordnung ist auch für den in Fig. 1 gezeigten Entwickler C vorgesehen, der bei dem in Fig. 1 gezeigten Beispiel allerdings nicht bei der Erstellung von Quellcode beteiligt ist.

In dem Schritt S1 werden die öffentlichen Signaturschlüssel PubA, PubB und PubC für jeden registrierten und akkreditierten Software-Entwickler in die gesicherte Infrastruktur DCUA importiert. Die jeweiligen dazugehörigen privaten Signaturschlüssel verbleiben bei den Software-Entwicklern.

Die gesicherte Infrastruktur DCUA umfasst im Wesentlichen gekapselte Zonen bzw. Segmente eines Rechenzentrums, die durch spezielle Maßnahmen gesichert sind. Derartige Maßnahmen können beispielsweise spezielle Räume mit speziellen Sicherheitstüren sein. Zudem kann ein Netz von Sensoren vorgesehen sein, mit dem die gesicherte Infrastruktur gesichert wird, sodass weder physisch vor Ort noch logisch über eine elektronische Schnittstelle ein Zugriff möglich ist, ohne hierbei einen Alarm auszulösen. Ein Zugriff von außen auf die in der gesicherten Infrastruktur DCUA gespeicherten Daten wird nur über einige wenige ganz spezielle Schnittstellen zugelassen, wobei auch diese Schnittstellen mit speziellen Filtern überwacht werden, um auch Angriffsversuche über diese wenigen speziellen Schnittstellen zu erkennen.

Gemäß der vorliegenden Erfindung ist in der gesicherten Infrastruktur DCUA eine Compilereinrichtung CE angeordnet, mit der der von den Software-Entwicklern erzeugte Quellcode in einen ausführbaren Binärcode übersetzt werden kann. Vorzugsweise handelt es sich auch bei der Compilereinrichtung CE um eine besonders vertrauenswürdige Software. Erfindungsgemäß werden der in der gesicherten Infrastruktur DCUA angeordneten Compilereinrichtung CE die zu übersetzenden Quellcode-Komponenten oder Quellcode-Abschnitte über eine in der gesicherten Infrastruktur DCUA vorhandene Schnittstelle zugeführt. Diese Schnittstelle ist in einer vorteilhaften Ausführungsform der Erfindung so ausgestaltet, dass lediglich ein Quellcode-Server QS, in dem die zu übersetzenden Quellcode-Komponenten gespeichert sind, mit der gesicherten Infrastruktur DCUA bzw. mit der Compilereinrichtung CE kommunizieren kann.

Die in dem ersten Schritt S1 in die gesicherte Infrastruktur DCUA importierten öffentlichen Signaturschlüssel PubA bis PubC der Software-Entwickler A bis C können in der gesicherten Infrastruktur ausschließlich in einer volatilen Speichereinrichtung VM gespeichert werden. Diese öffentlichen Signaturschlüssel können aber auch in einer permanenten Speichereinrichtung der gesicherten Infrastruktur DCUA gespeichert werden.

In dem Schritt S2 signiert ein erster Software-Entwickler A den von ihm erstellten Quellcode C1 mit seinem privaten Signaturschlüssel PrivA. Sodann wird der von dem ersten Software-Entwickler A signierte Quellcode C1 von dem zweiten Software-Entwickler B mit dessen privatem Signaturschlüssel PrivB signiert. Vorteilhaft ist es hierbei, wenn der zweite Software-Entwickler B den vom ersten Software-Entwickler A erstellten Quellcode erst nach einer genauen Prüfung signiert. Beispielsweise kann der zweite Software-Entwickler B den Quellcode dahingehend überprüfen, ob bestimmte Programmierrichtlinien eingehalten wurden. Der Quellcode kann auch dahingehend überprüft werden, ob dieser Code-Abschnitte enthält, die die Sicherheit der zu verarbeitenden Daten oder andere Software gefährden. Vorteilhaft ist es, wenn der zweite Software-Entwickler B bei der Prüfung des von dem ersten Software-Entwickler A erzeugten Quellcodes alle Maßnahmen ergreift, mit denen der zweite Software-Entwickler B die Vertrauenswürdigkeit des Quellcodes durch Signieren des Quellcodes bestätigen kann.

Findet der zweite Software-Entwickler B nicht-vertrauenswürdige Code-Abschnitte, kann er den ersten Software-Entwickler A dazu auffordern, diese Code-Abschnitte zu überarbeiten. Die von dem ersten Software-Entwickler A erzeugte Signatur würde dann ungültig werden und der erste Software-Entwickler A müsste dann nach der Überarbeitung des Quellcodes diesen erneut mit seinem privaten Signaturschlüssel PrivA signieren. Dieser neu signierte Quellcode C1 kann dann wiederum von dem zweiten Software-Entwickler B geprüft und anschließend mit dessen privatem Signaturschlüssel PrivB signiert werden. Dieses Vorgehen kann so lange wiederholt werden, bis der zweite Software-Entwickler B der Auffassung ist, dass der von dem ersten Software-Entwickler A erzeugte und signierte Quellcode C1 vertrauenswürdig ist.

Die Zuständigkeit der beiden Software-Entwickler A und B kann nach einer vorbestimmten Zeit getauscht werden, d.h. der Software-Entwickler B übernimmt dann die Erstellung des Quellcodes und der erste Software-Entwickler A übernimmt dann die Überprüfung des Quellcodes.

In einer alternativen Ausgestaltung der Erfindung, die in Fig. 1 nicht gezeigt ist, kann auch noch ein dritter Software-Entwickler C in den Prozess der Erstellung des Quellcodes eingebunden sein. In diesem Fall können die beiden Software-Entwickler A und B im sogenannten Vier-Augen-Prinzip den Quellcode erstellen. Der dritte Software-Entwickler C fungiert dann als sogenannter "Committer", der lediglich den von den beiden Software-Entwicklern A, B erzeugten Quellcode überprüft und bei Vorliegen der geforderten Vertrauenswürdigkeit den von den beiden Software-Entwicklern A, B signierten Quellcode ebenfalls signiert. In diesem Fall kann es vorgesehen sein, dass beide Software-Entwickler A, B ihren gemeinsam erstellten Quellcode mit ihrem jeweiligen privaten Signaturschlüssel PrivA, PrivB signieren. In diesem Fall weist der signierte Quellcode C2 drei Signaturen auf.

Der erstellte und signierte Quellcode C2 wird in dem Schritt S3 in dem Quellcode-Server QS gespeichert. Die Übertragung des signierten Quellcodes C2 zu dem Quellcode-Server QS kann über eine gesicherte Verbindung erfolgen. Allerdings muss diese Verbindung nicht notwendigerweise eine gesicherte Verbindung sein, denn durch eine Änderung des Quellcodes auf dem Übertragungsweg zum Quellcode-Server QS würde dazu führen, dass die Signaturen des Quellcodes C2 ungültig würden. Die Compilereinrichtung CE würde dann erkennen, dass ein zu übersetzender Quellcode bzw. Quellcode-Abschnitt eine ungültige Signatur aufweist. In diesem Fall kann die Compilereinrichtung CE eine Übersetzung des Quellcodes bzw. des Quellcode-Abschnittes verweigern.

In dem Quellcode-Server QS werden alle Quellcode-Komponenten bzw. Quellcode-Abschnitte einer zu erzeugenden Software gespeichert, wobei alle die zu einer erzeugenden Software gehörenden Quellcode-Komponenten bzw. Quellcode-Abschnitte von ihren Entwicklern signiert wurden. Durch das zuvor beschriebene Verfahren des Signierens der Quellcode-Abschnitte kann einerseits sichergestellt werden, dass sämtliche Quellcode-Abschnitte einer zu erzeugenden Software vertrauenswürdig sind. Daraus ergibt sich auch, dass die aus diesen vertrauenswürdigen Quellcode-Abschnitten von der Compilereinrichtung CE erzeugte Software ebenfalls vertrauenswürdig ist, sofern auch das Erzeugen eines ausführbaren Programms aus den signierten Quellcode-Abschnitten gemäß dem nachfolgend weiter beschriebenen erfindungsgemäßen Verfahren erfolgt.

Zum Erzeugen des ausführbaren Programms bzw. des Binärcodes aus den in dem Quellcode-Server QS gespeicherten und signierten Quellcode-Abschnitten werden in dem Schritt S4 die hierfür erforderlichen signierten Quellcode-Abschnitte C2 in die gesicherte Infrastruktur DCUA geladen und dort zum Übersetzen der Compilereinrichtung CE zugeführt.

Die Compilereinrichtung CE überprüft zunächst im Schritt S5.1, ob der importierte Quellcode C2 mit einem privaten Signaturschlüssel PrivA, PrivB, signiert wurde, der zu einem der importierten öffentlichen Signaturschlüssel PubA, PubB gehört. Diese Überprüfung kann mit an sich aus dem Stand der Technik bekannten Verfahren zur Signaturprüfung durchgeführt werden.

Ergibt diese in dem Schritt S5.1 durchgeführte Überprüfung, dass sämtliche für das Erzeugen eines Programmes benötigten Quellcode-Abschnitte C2 valide signiert wurden, erzeugt die Compilereinrichtung C3 in dem Schritt S5.2 aus den importierten Quellcode-Abschnitten C2 ein ausführbares Programm, beispielsweise einen Binärcode.

Bei diesem erzeugten Binärcode handelt es sich dann um einen vertrauenswürdigen Binärcode bzw. um eine vertrauenswürdige Software.

Um auch für den erzeugten Binärcode bzw. für die erzeugte ausführbare Software die Vertrauenswürdigkeit zu bestätigen, ist es vorgesehen, dass der erzeugte Binärcode in der gesicherten Infrastruktur DCUA ebenfalls signiert wird. Hierzu ist es vorgesehen, dass der erzeugte Binärcode mit einem der Compilereinrichtung CE bzw. mit einem der gesicherten Infrastruktur DCUA zugeordneten privaten Signaturschlüssel PrivCE signiert wird. Wesentlich ist hierbei, dass dieser private Signaturschlüssel PrivCE ausschließlich in einer volatilen Speichereinrichtung VM innerhalb der gesicherten Infrastruktur DCUA gespeichert wird. Der Vorteil hierzu wird nachfolgend näher beschrieben.

In dem Schritt S6 wird dann der signierte Binärcode C3 auf einen außerhalb der gesicherten Infrastruktur DCUA angeordneten Binärcode-Server BS exportiert und dort zur weiteren Verwendung bereitgestellt. Gleichzeitig wird auch der zu dem privaten Signaturschlüssel PrivCE gehörende öffentliche Signaturschlüssel PubCE auf dem Binärcode-Server BS exportiert und dort dem signierten Binärcode C3 zugeordnet. Anhand des exportierten öffentlichen Signaturschlüssels PubCE können Verwender des signierten Binärcodes C3 überprüfen, ob der Binärcode mit einem validen Signaturschlüssel signiert wurde und es sich bei diesem Binärcode daher um einen vertrauenswürdigen Binärcode handelt.

Durch das ausschließliche Speichern des privaten Signaturschlüssels PrivCE in einer volatilen Speichereinrichtung VM der gesicherten Infrastruktur DCUA kann sichergestellt werden, dass nach einem unberechtigten Zugriff von außen auf die gesicherte Infrastruktur DCUA der private Signaturschlüssel PrivCE durch Trennen des volatilen Speichers VM von der Stromversorgung gelöscht wird. Gleichzeitig ist damit auch gewährleistet, dass bereits zuvor valide signierte Binärcodes trotzdem als vertrauenswürdig eingestuft werden können, da zu diesem Zeitpunkt die Binärcodes mit einem gültigen privaten Signaturschlüssel PrivCE signiert wurden.

Nach der Detektion eines unberechtigten Zugriffs und nach dem Löschen des privaten Signaturschlüssels PrivCE aus der volatilen Speichereinrichtung VM muss ein neues Schlüsselpaar für die Signierung von Binärcodes erzeugt werden. Erfindungsgemäß ist es hierbei vorgesehen, dass dieses kryptographische Schlüsselpaar ausschließlich in der gesicherten Infrastruktur DCUA erzeugt wird und dass der private Signaturschlüssel PrivCE dieses neuen Schlüsselpaares ausschließlich in dem volatilen Speicher VM der gesicherten Infrastruktur DCUA gespeichert wird.

Nach dem Erzeugen eines neuen kryptographischen Schlüsselpaares werden die von der Compilereinrichtung CE erzeugten Binärcodes mit dem neuen privaten Signaturschlüssel PrivCE signiert und zusammen mit dem neuen öffentlichen Signaturschlüssel PubCE auf den Binärcode-Server BS exportiert.

Sofern auch die den Software-Entwicklern A bis C zugeordneten öffentlichen Signaturschlüssel PubA bis PubC in einem volatilen Speicher der gesicherten Infrastruktur DCUA gespeichert wurden, müssen diese öffentlichen Signaturschlüssel nach einem Trennen des volatilen Speichers von der Stromversorgung wieder in die gesicherte Infrastruktur DCUA importiert werden (wie in Bezug auf den Schritt S1 beschrieben).

Mit dem zuvor beschriebenen Verfahren ist gewährleistet, dass aus dem von einem ersten Software-Entwickler A erzeugten Quellcode ein Binärcode erzeugt wird, der als vertrauenswürdig eingestuft werden kann.

## Patentansprüche

1. Verfahren zur Sicherung der Vertrauenswürdigkeit von Software-Quellcode (Quellcode), wobei
- zumindest ein erster Softwareentwickler (A) und ein zweiter Softwareentwickler (B) für die Programmierung des Quellcodes registriert werden (S1), wobei den jeweiligen Softwareentwicklern (A, B) zugeordnete Daten zusammen mit einem dem jeweiligen Softwareentwickler (A, B) gehörenden öffentlichen Signaturschlüssel (PubA, PubB) in eine gesicherte Infrastruktur (DCUA) importiert werden,
- der erste Softwareentwickler (A) den von ihm erstellten Quellcode mit seinem privaten Signaturschlüssel (PrivA) signiert und der zweite Softwareentwickler (B) den vom ersten Softwareentwickler (A) signierten Quellcode (C1) mit seinem privaten Signaturschlüssel (PrivB) signiert (S2),
- der von beiden Softwareentwicklern (A, B) signierte Quellcode (C2) in einem Quellcode-Server (QS) gespeichert wird (S3),
- eine in der gesicherten Infrastruktur (DCUA) angeordnete Compilereinrichtung (CE)
- den signierten Quellcode (C2) vom Quellcode-Server (QS) in die gesicherte Infrastruktur (DCUA) importiert (S4),
- überprüft, ob der importierte Quellcode mit privaten Signaturschlüsseln (PrivA, PrivB) signiert wurde, die zu den importierten öffentlichen Signaturschlüsseln (PubA, PubB) gehören (S5.1), und
- den importierten Quellcode in einen ausführbaren Binärcode übersetzt (S5.2), und
- die Compilereinrichtung (CE) den Binärcode in der gesicherten Infrastruktur (DCUA) mit einem der Compilereinrichtung zugeordneten privaten Signaturschlüssel (PrivCE) signiert und den signierten Binärcode (C3) zusammen mit dem zum privaten Signaturschlüssel (PrivCE) der Compilereinrichtung gehörenden öffentlichen Schlüssel (PubCE) auf einen Binärcode-Server (BS) außerhalb der gesicherten Infrastruktur (DCUA) exportiert (S6) und ihn dort zur weiteren Verwendung bereitstellt.

2. Verfahren nach dem vorhergehenden Anspruch, wobei der der Compilereinrichtung (CE) zugeordnete private Signaturschlüssel (PrivCE) ausschließlich in der gesicherten Infrastruktur (DCUA) gespeichert wird.

3. Verfahren nach dem vorhergehenden Anspruch, wobei der der Compilereinrichtung (CE) zugeordnete private Signaturschlüssel (PrivCE) ausschließlich in einer volatilen Speichereinrichtung (VM) der gesicherten Infrastruktur (DCUA) gespeichert wird.

4. Verfahren nach einem der vorhergehenden Ansprüche, wobei der der Compilereinrichtung (CE) zugeordnete private Signaturschlüssel (PrivCE) und der zu diesem privaten Signaturschlüssel (PrivCE) gehörende öffentliche Schlüssel (PubCE) ausschließlich innerhalb der gesicherten Infrastruktur (DCUA) erzeugt werden.

5. Verfahren nach einem der Ansprüche 3 oder 4, wobei eine Sensoreinrichtung der gesicherten Infrastruktur (DCUA) laufend Zugriffe auf die gesicherte Infrastruktur überwacht und bei einer Detektion eines unberechtigten Zugriffes zumindest den der Compilereinrichtung (CE) zugeordneten privaten Signaturschlüssel (PrivCE) löscht.

6. Verfahren nach dem vorhergehenden Anspruch, wobei nach dem Löschen des der Compilereinrichtung (CE) zugeordneten privaten Signaturschlüssels (PrivCE) ein neuer der Compilereinrichtung zugeordneter privater Signaturschlüssel (PrivCE') und ein neuer zu dem neuen privaten Signaturschlüssel (PrivCE') gehörender öffentlicher Schlüssel (PubCE') erzeugt werden.

## Claims

1. A method for ensuring the trustworthiness of software source code (source code), wherein
- at least a first software developer (A) and a second software developer (B) for programming the source code are registered (S1), wherein data assigned to the respective software developers (A, B), together with a public signature key (PubA, PubB) belonging to the respective software developer (A, B), are imported into a secure infrastructure (DCUA),
- the first software developer (A) signs the source code created by him with his private signature key (PrivA) and the second software developer (B) signs the source code (C1) signed by the first software developer (A) with his private signature key (PrivB) (S2),
- the source code (C2) signed by both software developers (A, B) is stored in a source code server (QS) (S3),
- a compiling device (CE) arranged in the secure infrastructure (DCUA)
- imports the signed source code (C2) from the source code server (QA) into the secure infrastructure (DCUA) (S4),
- checks whether the imported source code has been signed with private signature keys (PrivA, PrivB) belonging to the imported public signature keys (PubA, PubB) (S5.1), and
- translates the imported source code into executable binary code (S5.2), and
- the compiling device (CE) signs the binary code in the secure infrastructure (DCUA) with a private signature key (PrivCE) assigned to the compiling device and exports the signed binary code (C3), together with the public key (PubCE) belonging to the private signature key (PrivCE) of the compiling device, to a binary code server (BS) outside the secure infrastructure (DCUA) and provides same on said server for further use (S6).

2. The method according to the preceding claim, wherein the private signature key (PrivCE) assigned to the compiling device (CE) is stored exclusively in the secure infrastructure (DCUA).

3. The method according to the preceding claim, wherein the private signature key (PrivCE) assigned to the compiling device (CE) is stored exclusively in a volatile memory device (VM) of the secure infrastructure (DCUA).

4. The method according to any of the preceding claims, wherein the private signature key (PrivCE) assigned to the compiling device (CE) and the public key (PubCE) belonging to this private signature key (PrivCE) are produced exclusively within the secure infrastructure (DCUA).

5. The method according to any of claims 3 or 4, wherein a sensor device of the secure infrastructure (DCUA) continuously monitors access to the secure infrastructure and, upon detection of unauthorized access, deletes at least the private signature key (PrivCE) assigned to the compiling device (CE).

6. The method according to the preceding claim, wherein, after the private signature key (PrivCE) assigned to the compiling device (CE) has been deleted, a new private signature key (PrivCE') assigned to the compiling device and a new public key (PubCE') belonging to the new private signature key (PrivCE') are produced.

## Revendications

1. Procédé permettant de garantir la fiabilité d'un code source de logiciel (code source), dans lequel
- au moins un premier développeur de logiciel (A) et un second développeur de logiciel (B) sont enregistrés (S1) pour la programmation du code source, dans lequel des données associées aux développeurs de logiciels respectifs (A, B) sont importées dans une infrastructure sécurisée (DCUA) conjointement avec une clé publique de signature (PubA, PubB) appartenant à chaque développeur de logiciel (A, B),
- le premier développeur de logiciel (A) signe le code source qu'il génère au moyen de sa clé privée de signature (PrivA) et le second développeur de logiciel (B) signe (S2) le code source (C1) signé par le premier développeur de logiciel (A) au moyen de sa clé privée de signature (PrivB),
- le code source (C2) signé par les deux développeurs de logiciels (A, B) est stocké (S3) dans un serveur de codes sources (QS),
- un dispositif compilateur (CE) agencé dans l'infrastructure sécurisée (DCUA)
- importe (S4) le code source signé (C2) du serveur de codes sources (QS) dans l'infrastructure sécurisée (DCUA),
- vérifie si le code source importé a été signé au moyen de clés privées de signature (PrivA, PrivB) qui appartiennent (S5.1) aux clés publiques de signature (PubA, PubB) importées, et
- traduit (S5.2) le code source importé en un code binaire exécutable, et
- le dispositif compilateur (CE) signe le code binaire dans l'infrastructure sécurisée (DCUA) au moyen d'une clé privée de signature (PrivCE) associée au dispositif compilateur et exporte (S6) le code binaire signé (C3) conjointement avec la clé publique (PubCE) appartenant à la clé privée de signature (PrivCE) du dispositif compilateur vers un serveur de code binaire (BS) en dehors de l'infrastructure sécurisée (DCUA) et le met à disposition pour utilisation ultérieure.

2. Procédé selon la revendication précédente, dans lequel la clé privée de signature (PrivCE) associée au dispositif compilateur (CE) est stockée uniquement dans l'infrastructure sécurisée (DCUA).

3. Procédé selon la revendication précédente, dans lequel la clé privée de signature (PrivCE) associée au dispositif compilateur (CE) est stockée uniquement dans un dispositif de mémoire volatile (VM) de l'infrastructure sécurisée (DCUA).

4. Procédé selon l'une des revendications précédentes, dans lequel la clé privée de signature (PrivCE) associée au dispositif compilateur (CE) et la clé publique (PubCE) appartenant à cette clé privée de signature (PrivCE) sont générées uniquement dans l'infrastructure sécurisée (DCUA).

5. Procédé selon l'une des revendications 3 ou 4, dans lequel un dispositif capteur de l'infrastructure sécurisée (DCUA) surveille en permanence les accès à l'infrastructure sécurisée et, en cas de détection d'un accès non autorisé, supprime au moins la clé privée de signature (PrivCE) associée au dispositif compilateur (CE).

6. Procédé selon la revendication précédente, dans lequel, après la suppression de la clé privée de signature (PrivCE) associée au dispositif compilateur (CE), une nouvelle clé privée de signature (PrivCE') associée au dispositif compilateur et une nouvelle clé publique (PubCE') appartenant à la nouvelle clé privée de signature (PrivCE') sont générées.
